# EUROPEAN PATENT APPLICATION

(11) **EP 4 491 854 A1**
(43) Date of publication of application: **15.01.2025**
(21) Application number: 24187531.9
(22) Date of filing: 09.07.2024
(51) Int. Cl.: F01D 25/04, F01D 25/24, F04D 29/66, F16F 15/02

(54) **SHEET METAL CASING MECHANICAL DAMPING RETAINING RING**

(30) Priority: 10.07.2023 US 202318349524
(71) Applicant: PRATT & WHITNEY CANADA CORP., Longueuil, Québec J4G 1A1 (CA)
(72) Inventor: OLECH, Tomasz, (01BE5) Longueuil, J4G 1A1 (CA); DEMENOIS, Morgan, (01BE5) Longueuil, J4G 1A1 (CA); ABAEIAN, Negin, (01BE5) Longueuil, J4G 1A1 (CA); DI FLORIO, Domenico, (01BE5) Longueuil, J4G 1A1 (CA); PENDYALA, Raghavendra, (01BE5) Longueuil, J4G 1A1 (CA)
(74) Representative: Dehns

(57) **Abstract**

A gas turbine engine (20) includes a compressor section (24), a combustor (26) and a turbine section (28). At least one case (30) surrounds at least one of the compressor section (24) and the turbine section (28). The case (30) is formed from sheet metal and includes a case wall (36) and at least one potential displacement location due to vibration. At least one retaining ring (32) is assembled to the case (30) and biased against the case wall at the at least one potential displacement location to dampen vibration by means of generating an inwardly directed compressive force (58).

## Description

### TECHNICAL FIELD

The present disclosure relates generally to a case for a turbine engine, and more particularly to a case formed form sheet metal that includes features for dampening vibration.

### BACKGROUND

Turbine engines typically include a propulsor section, a compressor section, a combustor section and a turbine section. There are several housings in a typical gas turbine engine. One such housing is an inter-compressor case disposed in the compressor section. Typically, the inter-compressor case is formed of sheet metal material welded that may include cutouts. The inter-compressor case may support accessory devices and structures of various sizes and shapes. The inter-compressor case is not pressurized and therefore the sheet metal material is relatively thin. The thin case structure may be subject to vibrational excitement at various engine operating conditions. The vibrational excitement may affect engine operation and part durability.

Turbine engine manufacturers continue to seek further improvements to engine performance including improvements to thermal, transfer and propulsive efficiencies.

### SUMMARY

A gas turbine engine according to an exemplary embodiment of this disclosure includes, among other possible things, a compressor section, a combustor section and a turbine section. A case surrounds at least one of the compressor section and the turbine section. The case includes a case wall formed of sheet metal and at least one potential displacement location. At least one retaining ring is assembled on the case and biased against the case wall at the at least one potential displacement location.

A gas turbine engine according to another exemplary embodiment of this disclosure includes, among other possible things, a compressor section, a combustor and a turbine section. An inter-compressor case surrounds the compressor section. The inter-compressor case includes a case wall formed of sheet metal and at least one potential displacement location. A retaining ring is assembled on the inter-compressor case and is biased against the case wall at the at least one potential displacement location.

A method of configuring a case for a gas turbine engine according to another exemplary embodiment of this disclosure includes, among other possible things, the steps of defining a case formed of sheet metal to surround one of a compressor section and a turbine section, modeling a vibrational response of the defined case at expected engine operating conditions, determining at least one displacement location along the case based on the modeled vibrational response, defining at least one mounting location for a retaining ring at the at the at least one displacement location, and determining a retaining ring configuration for assembly into the at least one mounting location.

Features of embodiments are set forth in the dependent claims.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example gas turbine engine with an example sheet metal case.
Figure 2 is an axial schematic view of an example retaining ring assembled to a case.
Figure 3 is a cross-section of an example retaining ring.
Figure 4 is a cross-section of an example case embodiment.
Figure 5 is a schematic cross-section of example retaining ring assembly embodiments.
Figure 6 is a cross-section of another example case embodiment.
Figure 7 is a cross-section of another example case embodiment.
Figure 8 is a cross-section of another example case embodiment.
Figure 9 is a cross-section of another example case embodiment.
Figure 10 is a flow diagram of an example method of configuring a case.

### DETAILED DESCRIPTION

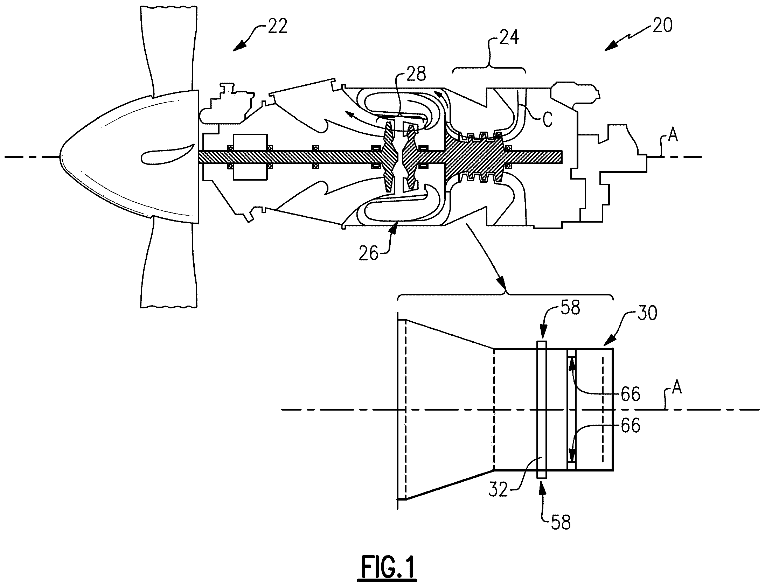

Figure 1 schematically illustrates a gas turbine engine 20 that includes a case 30 with at least one retaining ring 32 that exerts a biasing force against a surface of the case to dampen vibration.

The example gas turbine engine 20 is a turboprop engine that generally incorporates a fan section 22, a compressor section 24, a combustor section 26 and a turbine section 28. The compressor section 24 drives air along a core flow path C into the compressor section 24 for compression and communication into the combustor section 26. In the combustor section 26, the compressed air is mixed with fuel and burnt to generate an exhaust gas flow that expands through the turbine section 28 to produce a mechanical power output utilized to drive the fan section 22. Although depicted as a turboprop engine in the disclosed non-limiting embodiment, it should be understood that the concepts described herein are not limited to use with turbofans as the teachings may be applied to other gas turbine engine architectures.

The case 30 is subject to vibrations during engine operation that may create modal interferences within the engine 20. A retaining ring 32 is assembled to the case 30 and exerts a biasing force against a surface of the case 30 that dampens vibration. The retaining ring 32 may provide an inwardly directed compressive biasing force 58 on an outside surface of the case 30. Alternatively, the retaining ring 32 may generate an outwardly directed biasing force 66 on an inner surface of the case 30. Although the retaining ring 32 is assembled to the case 30, the retaining ring 32 is not attached, such as by welding or fasteners to the case 30. Instead, the retaining ring 32 is frictionally engaged to the case 30. In either disclosed configuration, frictional engagement between the retaining ring 32 and a surface of the case 30 dampens vibration to inhibit resonance vibrational frequencies.

In one disclosed example, the case 30 is an inter-compressor case (ICC) that surrounds a portion of the compressor section 24. However other non-pressurized case structures could be utilized and would benefit from and are within the specific contemplation of this disclosure. Moreover, although the example ICC is shown and described as being part of a turbofan engine, other turbine engines architectures including those without a propulsor and/or fan section are within the scope and contemplation of this disclosure.

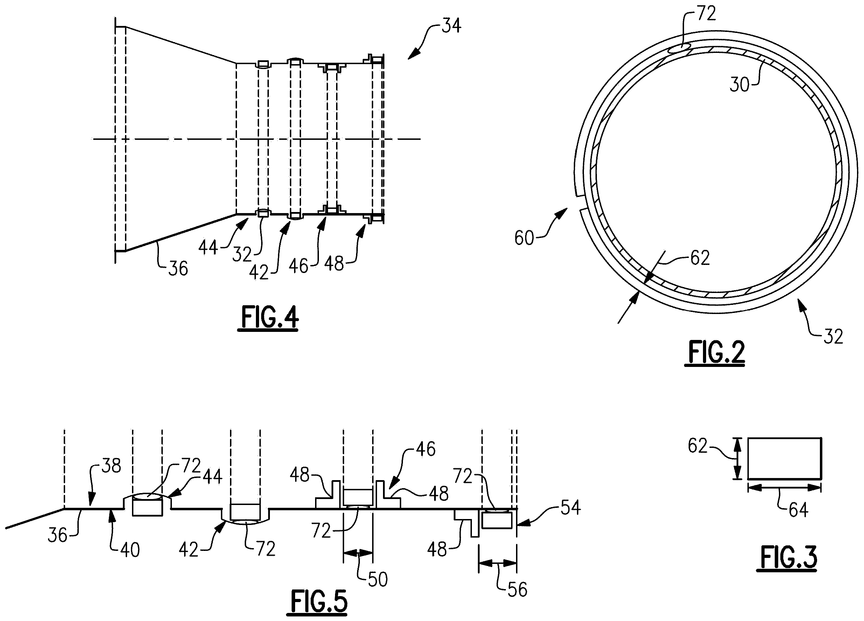

Referring to Figures 2 and 3 with continued reference to Figure 1, the retaining ring 32 includes a width 64 and a thickness 62 that provides a desired damping. The retaining ring 32 includes a split 60 that enables assembly to the case 30. In the example illustrated in Figure 2, the ring 32 exerts an inwardly directed compressive biasing force on an outer surface of the case 30. The retaining ring 32 is not physically connected nor attached to the case 30. The biasing force creates a frictional interface between the case 30 and the retaining ring schematically indicated at 72. The example frictional interface 72 extends about the entire circumference of the case 30 and the retaining ring 32. The amount of force provided by the retaining ring 32 is determined based on a location and magnitude of vibrations generated in the case 30 during engine operation.

Although the example retaining ring 32 is illustrated and disclosed by way of example as extending about most of the case 30, the retaining ring 32 may extend only partially about the case 30 and remain within the contemplation and scope of this disclosure.

The example retaining ring 32 embodiment is generally rectangular. However, the retaining ring 32 may have other cross-sectional shapes within the contemplation of this disclosure. For example, the retaining ring 32 may have a cross-section that is square, bowed, circular, oval, corrugated, w-shaped, or any other shape that provides the desired localized biasing force to dampen vibrations. Moreover, the example retaining ring 32 is formed from a metal material. However, the example retaining ring 32 may be formed from other materials and remain within the scope and contemplation of this disclosure.

Referring to Figures 4 and 5, an example case 34 is shown in cross-section to illustrate several example mounting embodiments. The case 34 has a wall 36 with an inner surface 38 and an outer surface 40. An example retaining ring 32 maybe abutted against either the inner surface 38 or the outer surface 40.

In one example embodiment, an outer groove 44 is formed into the wall 36 and the retaining ring 32 is assembled into the outer groove 44. In another example, an inner groove 42 is formed on the inner surface 38 and the retaining ring 32 is installed within the inner groove 42.

In another example embodiment, a bracket assembly 46 is attached to the wall 36 and provides a space to hold the retaining ring 32. The example bracket assembly 46 includes L-shaped members 48 that are spaced apart an axial distance 50 that corresponds to an axial width of the retaining ring 32. The example bracket assembly 46 is shown attached to the inner surface 38. Alternatively, the bracket assembly 46 may also be attached to the outer surface 40. In one illustrated example, the retaining ring 32 is mounted within an axial space 56 between a flange 54 of the case 34 and a L-shaped member 48.

In all of the example embodiments, the retaining ring 32 is in frictional engagement with the wall 36 at the interface 72. The biasing force exerted at the interface 72 dampens vibrations to prevent resonance during engine operations. Although groove and bracket embodiments are shown by way of example, other mounting configurations that maintain a location of the retaining ring 32 on the case 34 may also be utilized and are within the scope and contemplation of this disclosure. For example, the grooves need not be continuous about the case but be intermittently configured. Accordingly, the retaining ring 32 may be held by such intermediate groove portions that are spaced apart from each other about the circumference of the case 30.

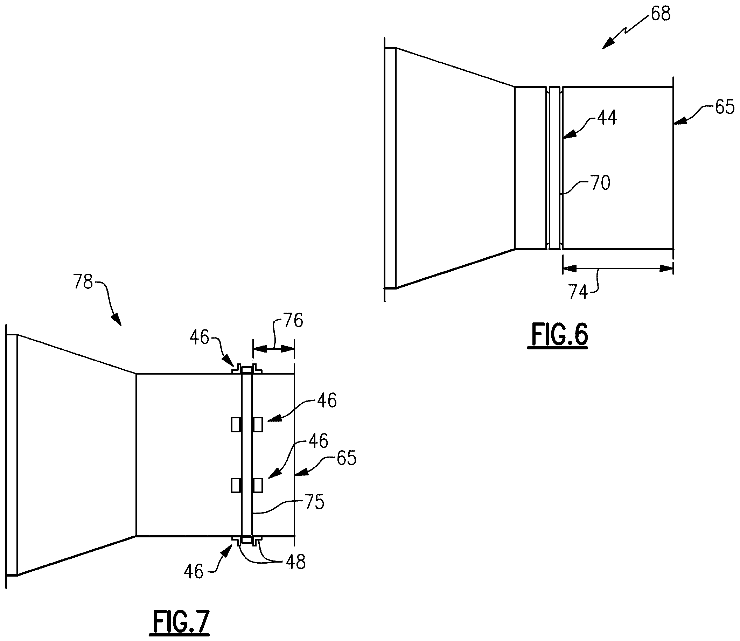

Referring to Figure 6, an example case 68 is shown with the outer groove 44 and a retaining ring 70. The outer groove 44 is spaced an axial distance 74 from one end 65 of the case 68. The axial distance 74 is determined based on a determined location of vibrational responses of the case 68. The axial distance 74 may represent a peak vibrational response location, or one of several locations that exhibit a vibrational response at a specific operating condition that warrants dampening. Although a single retaining ring 70 is shown, several retaining rings 70 may be provided along with corresponding grooves 44 to tailor dampening to specific identified locations.

Referring to Figure 7, another case 78 is shown with a retaining ring 75 that is held an axial distance 76 from the case end 65 by bracket assemblies 46. Multiple bracket assemblies 46 are spaced circumferentially apart to maintain the set position of the retaining ring 75. The example bracket assembly 46 includes the L-shaped elements 48 attached to the case 78. Although the example retaining ring 75 is shown attached about an outer surface of the case 78, the retaining ring 75 may also be located and assembled to an interior surface of the case 78 to tailor assembly to application specific requirements.

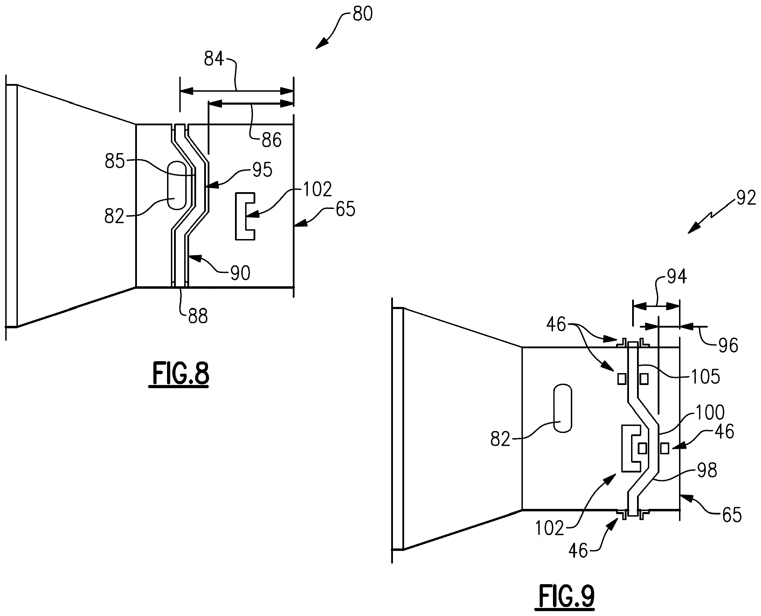

Referring to Figure 8, another example case 80 is shown and includes opening 82 and groove 90 with a distorted non-circumferential portion 95. The openings 82 are examples of accessory structures that may be incorporated as part of the case 80. A boss 102 may also be provide on the case 80 and is another example of an accessory structure that may be formed in or attached to the case 80.

The location of the accessory structures 82, 102 may correspond to a location determined to warrant vibrational dampening. Accordingly, the example retaining ring 88 includes a distorted portion 85 that bends and extends around the opening 82. The majority of the retaining ring 88 is disposed at a location spaced axially a distance 84 from the end 65. The distorted portion 85 is spaced apart a different axial distance 86 that is routed around the opening 82. Although the example retaining ring 88 shows a single distorted portion 85, more than one distorted portion 85 may be included to avoid accessory structures located circumferentially about the case 80.

Referring to Figure 9, another case 92 is shown with a retaining ring 98 having a distorted portion 100 and is held in place by bracket assemblies 46. In this example, the distorted portion 100 routes the retaining ring 98 about the boss 102. The bracket assemblies 46 are attached about the circumference of the case 92 to hold the retaining ring 98 in the desired location. The distorted portion 100 of the retaining ring 98 is disposed in a non-circumferential direction. The distorted portion 100 is spaced a distance 96 from the case end 65. The remaining circumferentially extending portions 105 of the retaining ring 98 are disposed at a distance 94 from the case end 65.

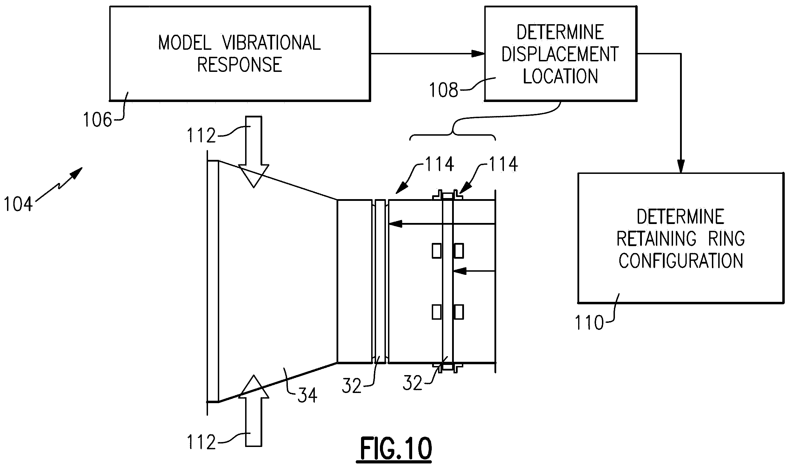

Referring to Figure 10, placement of the retaining ring 32 is tailored to dampen vibrational response in the case 34. Rather than increase the stiffness of the entire case 34 and significantly increase weight, the retaining rings 32 are utilized to target damping at specific identified locations. In one example embodiment schematically indicated at 104, the locations for the retaining rings 32 are based on a model of vibrational responses for expected engine operating conditions as indicated at 106. Vibrational inputs indicated at 112 based on expected operating conditions are modeled or determined based on experimentation. Locations 114 of the vibrational responses are then determined as indicated at 108. Once the locations 114 are determined, a retaining ring configuration to dampen each of the determined vibrational responses is determined as indicated at 110. The configuration of the case 34 is than determined to provide retaining rings 32 at locations that warrant dampening.

A gas turbine engine 20 according to an example of this disclosure, among other possible things includes a compressor section 24, a combustor 26 and a turbine section 28. A case 30 surrounds at least one of the compressor section 24 and turbine section 28. The case 30 includes a case wall formed of sheet metal and at least one potential displacement location. At least one retaining ring 32 is assembled on the case 30 and is biased against the case wall at the at least one potential displacement location.

In a further example of the foregoing gas turbine engine, the case wall 36 includes an outer surface 40 and the retaining ring 32 is assembled to the outer surface 40.

In a further embodiment of any of the foregoing gas turbine engines, the case wall 36 includes an inner surface 38 and the retaining ring 32 is assembled to the inner surface 38.

In a further example of any of the foregoing gas turbine engines, the case wall 36 includes a circumferential groove 42, 44 and the retaining ring 32 is assembled within the circumferential groove 42, 44.

In a further example of any of the foregoing gas turbine engines, the circumferential groove 44 is disposed on an outer surface 40 of the case wall 36.

In a further example of any of the foregoing gas turbine engines, the circumferential groove 42 is disposed on an inner surface 38 of the case wall 36.

In a further example of any of the foregoing, the gas turbine engine includes at least one retention bracket assembly 46 that is attached to the case wall 36. The retaining ring 32 is constrained by the at least one retention bracket assembly 46.

In a further example of any of the foregoing gas turbine engines, the at least one retention bracket assembly 46 includes spaced apart retention members that are attached to the case wall 36 and the retaining ring 32 is disposed within a space between the retention members.

In a further example of any of the foregoing gas turbine engines, the retaining ring 32 is disposed at a common axial location about a circumference of the case 30.

In a further example of any of the foregoing gas turbine engines, the retaining ring 88, 98 includes at least one distorted portion 85, 100 that extends in a non-circumferential direction about the case 80, 92.

In a further example of any of the foregoing gas turbine engines, the case 80, 92 includes at least one accessory structure 82, 102 and the distorted portion 85, 100 of the retaining ring 88, 98 is disposed around the accessory structure 82, 102.

In a further example of any of the foregoing gas turbine engines, the accessory structure includes one of an opening 82 or a boss 102.

A gas turbine engine according to another example of this disclosure, among other possible things includes a compressor section 24, a combustor 26 and a turbine section 28. An inter-compressor case 30 surrounds the compressor section 24. The inter-compressor case 30 includes a case wall 36 formed of sheet metal and at least one potential displacement location. A retaining ring 32 is assembled on the inter-compressor case 30 and biased against the case wall 36 at the at least one potential displacement location.

In a further example of the foregoing gas turbine engine, the case wall 36 includes a circumferential groove 42, 44 and the retaining ring 32 is assembled within the circumferential groove 42, 44.

In a further example of any of the foregoing, at least one retention bracket assembly 46 is attached to the case wall 36. The retaining ring 32 is constrained by the at least one retention bracket assembly 46.

In a further example of any of the foregoing gas turbine engines, the retaining ring 32 is disposed at a common axial location about a circumference of the case 30.

In a further example of any of the foregoing gas turbine engines, the retaining ring 88, 98 includes at least one distorted portion 85, 100 that extends in a non-circumferential direction about the case 30.

A method of configuring a case 30 for a gas turbine engine according to another example of this disclosure, among other possible things includes the steps of defining a case 34 formed of sheet metal to surround one of a compressor section 24 and a turbine section 28, modeling a vibrational response of the defined case 34 at expected engine operating conditions, determining at least one displacement location along the case 34 based on the modeled vibrational response, defining at least one mounting location for a retaining ring 32 at the at the at least one displacement location, and determining a retaining ring configuration 32 for assembly at the at least one mounting location.

In a further example of the foregoing method, the at least one mounting location is disposed at a common axial location about a circumference of the case 34.

In a further example of any of the foregoing methods, the at least one mounting location includes at least one distorted portion 95 that extends in a non-circumferential direction about the case 80.

Accordingly, the disclosed example cases include retaining rings provided at locations tailored to dampening vibration without substantial modification to the case.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A gas turbine engine (20) comprising:
a compressor section (24), a combustor (26) and a turbine section (28);
a case (30; 34; 80; 92) surrounding at least one of the compressor section (24) and the turbine section (28), the case (30; 34; 80; 92) including a case wall (36) formed of sheet metal and at least one potential displacement location due to vibration; and
at least one retaining ring (32; 88; 98) assembled on the case (30; 34; 80; 92) and biased against the case wall (36) at the at least one potential displacement location.

2. The gas turbine engine as recited in claim 1, wherein the case wall (36) includes an outer surface (40) and the at least one retaining ring (32; 88; 98) is assembled to the outer surface (40).

3. The gas turbine engine as recited in claim 1, wherein the case wall (36) includes an inner surface (38) and the at least one retaining ring (32; 88; 98) is assembled to the inner surface (38).

4. The gas turbine engine as recited in any preceding claim, wherein the case wall (36) includes a circumferential groove (42; 44) and the at least one retaining ring (32; 88; 98) is assembled within the circumferential groove (42; 44).

5. The gas turbine engine as recited in claim 4, wherein the circumferential groove (44) is disposed on an outer surface (40) of the case wall (36).

6. The gas turbine engine as recited in claim 4, wherein the circumferential groove (42) is disposed on an inner surface (38) of the case wall (36).

7. The gas turbine engine as recited in any preceding claim, including at least one retention bracket assembly (46) attached to the case wall (36), wherein the at least one retaining ring (32; 88; 98) is constrained by the at least one retention bracket assembly (46).

8. The gas turbine engine as recited in claim 7, wherein the at least one retention bracket assembly (46) includes spaced apart retention members (48) attached to the case wall (36) and the at least one retaining ring (32) is disposed within a space between the retention members (48).

9. The gas turbine engine as recited in any preceding claim, wherein the at least one retaining ring (32; 88; 98) is disposed at a common axial location about a circumference of the case (30; 80; 92).

10. The gas turbine engine as recited in any of claims 1 to 8, wherein the at least one retaining ring (88; 98) includes at least one distorted portion (85; 95; 100) that extends in a non-circumferential direction about the case (80; 92).

11. The gas turbine engine as recited in claim 10, wherein the case (80; 92) includes at least one accessory structure (82; 102) and the distorted portion (85; 95; 100) of the at least one retaining ring (88; 98) extends around the accessory structure (82; 102), optionally wherein the accessory structure (82; 102) comprises one of an opening (82) or a boss (102).

12. The gas turbine engine as recited in any preceding claim, wherein the case (30; 34; 80; 92) surrounds the compressor section (24) and is an inter-compressor case (30; 34; 80; 92).

13. A method of configuring a case (30; 34; 80; 92) for a gas turbine engine (20) comprising the steps of:
defining a case (30; 34; 80; 92) formed of sheet metal to surround one of a compressor section (24) and a turbine section (28);
modeling a vibrational response of the defined case (30; 34; 80; 92) at expected engine operating conditions;
determining at least one displacement location along the case (30; 34; 80; 92) based on the modeled vibrational response;
defining at least one mounting location for a retaining ring (32; 88; 98) at the at the at least one displacement location; and
determining a retaining ring configuration for assembly at the at least one mounting location.

14. The method as recited in claim 13, wherein the at least one mounting location is disposed at a common axial location about a circumference of the case (30; 34; 80; 92).

15. The method as recited in claim 13 or 14, wherein the at least one mounting location includes at least one distorted portion (85; 95; 100) that extends in a non-circumferential direction about the case (30; 34; 80; 92).
